# FASCICULE DE BREVET EUROPEEN

(11) **EP 0 685 354 B1**
(45) Date de publication et mention de la délivrance du brevet: **23.06.1999**
(21) Numéro de dépôt: 95401243.1
(22) Date de dépôt: 30.05.1995
(51) Int. Cl.: B60G 11/08, B60G 11/12, F16F 1/368

(54) **Suspension à lame de ressort transversale pour véhicule automobile**
Radaufhängung mit Querblattfeder für Kraftfahrzeug
Transverse leaf-spring suspension for motor vehicle

(30) Priorité: 30.05.1994 FR 9406547
(43) Date de publication de la demande: 06.12.1995
(73) Titulaire: RENAULT, 92109 Boulogne-Billancourt (FR); HUTCHINSON, 75384 Paris Cédex 08 (FR)
(72) Inventeur: Fillion, Thierry, F-78580 Bazemont (FR); Chevret, Rémy, F-75010 Paris (FR)
(74) Mandataire: Ernst-Schonberg, Michel

(56) Documents cités:
- DE-C- 677 876
- FR-A- 2 671 762
- US-A- 2 939 720
- US-A- 4 768 807

## Description

La présente invention concerne une suspension à lame de ressort transversale pour un véhicule automobile dans laquelle ladite lame possède un axe de symétrie longitudinal et est reliée à un élément de châssis du véhicule au moyen d'une pluralité d'organes de liaison, d'une part, et par chacune de ses extrémités à un porte-fusée, d'autre part.

Une telle suspension correspondant au préambule de la revendication 1 est connue du document US-A-4 768 807.

La publication W0-87/01339 décrit une suspension à lame de ressort transversale. La lame de ressort est reliée au moyen de tampons élastiques disposés entre chaque face de celle-ci à une structure fixée sur le châssis du véhicule. En outre, l'extrémité inférieure de chaque porte-fusée est directement articulée sur la lame. Une telle suspension présente deux inconvénients majeurs :
- les éléments élastiques ne présentent pas une rigidité suffisante pour retenir la lame sous des sollicitations transversales dues notamment à des efforts de ripage,
- la liaison proposée des extrémités de la lame de ressort avec les porte-fusées nécessite la réalisation d'une cavité destinée à recevoir l'extrémité inférieure du porte-fusée dans la structure de la lame et conduit donc à un affaiblissement de cette dernière.

La publication US-5.147.097 décrit des moyens de fixation d'éléments en matériau composite sur un élément de châssis d'une part et sur une attache montée sur un porte-fusée d'autre part. Ces moyens de liaison sont constitués par des brides en tôle pliée. Une telle disposition génère d'importantes contraintes de cisaillement dans la lame au niveau des brides. En outre, le frottement de la lame contre ces brides lors du débattement de cette dernière est une source d'usure prématurée de ladite lame.

L'objet de la présente invention est de pallier les inconvénients de l'art antérieur en proposant une lame de ressort transversale dont les liaisons de cette dernière avec un élément de châssis du véhicule permettent un débattement de la lame au niveau desdites liaisons tout en permettant la retenue de cette lame sous l'effet d'efforts transversaux. Les liaisons permettent en outre d'éviter l'usure de la lame occasionnée par le frottement direct de la lame sur l'élément de structure. De plus, elles limitent les contraintes de cisaillement dans la lame au niveau des liaisons.

Selon l'invention, la suspension à lame de ressort transversale est caractérisée en ce que les organes de liaison de la lame avec l'élément de châssis du véhicule sont solidaires d'un même élément porteur.

Selon une caractéristique avantageuse de la présente invention, l'élément porteur d'une part et les attaches de fixation d'autre part sont montés élastiquement sur la lame par surmoulage et adhérisation d'un matériau élastomère.

A cet effet, l'élément porteur est disposé sur la face supérieure de la lame de suspension selon une direction sensiblement transversale à la lame.

Pour ce qui est des organes de liaison, ils comprennent, de préférence, des axes qui coopèrent avec une première et une deuxième articulation, afin de permettre un débattement de la lame lors du roulage du véhicule.

Avantageusement, une première articulation et une deuxième articulation situées d'un même côté de l'axe de symétrie longitudinal de la lame sont respectivement disposées à proximité des bords avant et arrière de la lame de suspension. Une telle disposition permet en effet de répartir les contraintes de torsion dans l'ensemble de la lame.

Selon l'invention, afin de permettre la retenue de la lame sous l'effet d'efforts transversaux dus notamment aux forces de ripage, chaque première articulation comprend un bloc élastomère alvéolé adhérisé d'une part sur un élément de révolution comportant une portion sphérique, et d'autre part sur un boîtier solidaire de l'élément porteur.

Selon l'invention, chaque deuxième articulation réalise une liaison de type rotulaire entre la lame de suspension et un élément de châssis du véhicule.

Selon l'invention, l'axe de l'organe de liaison comprenant la première articulation est disposé concentriquement à l'intérieur de l'élément de révolution.

Selon une autre caractéristique de l'invention, les centres de rotation respectifs de la première articulation et de la deuxième articulation sont situés entre l'élément de châssis et la surface extérieure de la lame.

On comprendra mieux les buts, aspects et caractéristiques de la présente invention, d'après la description donnée ci-après d'un mode de réalisation de l'invention présenté à titre d'exemple non limitatif, en se référant aux dessins annexés, dans lesquels :
- la figure 1 est une représentation en perspective de la suspension à lame transversale implantée sur le véhicule,

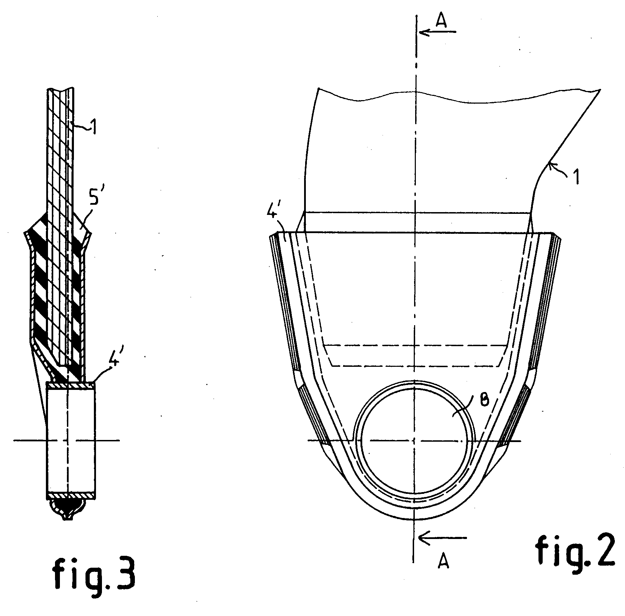

- la figure 2 est une vue de détail de la lame représentée à la figure 1, au niveau de la jonction de l'attache de fixation, de la lame et du porte-fusée,
- la figure 3 est une vue en coupe selon A-A de la figure 2,
- la figure 4 est une vue en coupe de la lame de suspension selon B-B de la figure 1,
- la figure 5 représente une vue en coupe selon C-C de la figure 4 de la première articulation située du côté gauche et d'une partie de la lame de suspension configurée en position dite "de choc",
- la figure 6 représente une vue en coupe selon C-C de la figure 4 de la première articulation située du côté droit du véhicule et d'une partie de la lame de suspension configurée en position dite "de choc",
- la figure 7 représente une vue en coupe de la première articulation représentée à la figure 6 et d'une partie de la lame configurée en position dite "de repos".

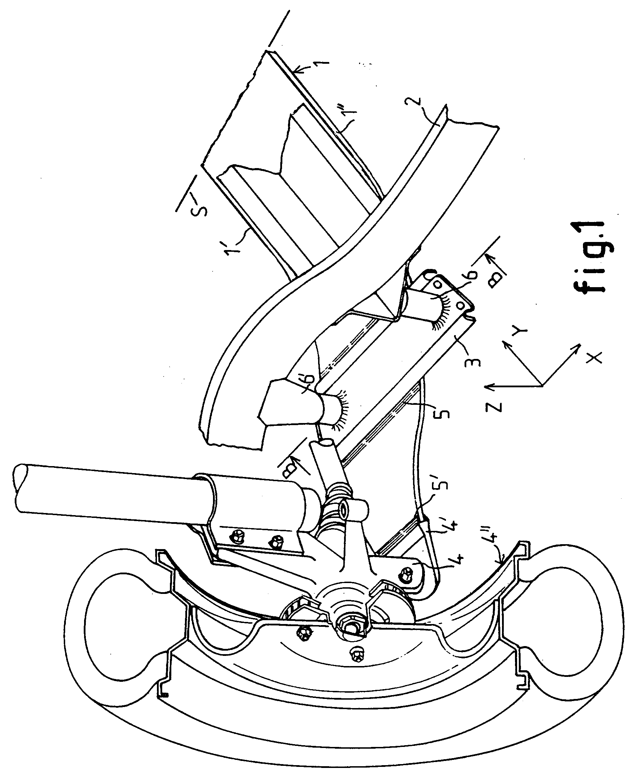

Conformément à la figure 1, la lame est réalisée à titre d'exemple en matériau composite à base de fibres enrobées dans une résine et qui s'étendent transversalement au véhicule entre les attaches de deux porte-fusées solidaires de roues. La lame réalise les fonctions de ressort de suspension, de structure de guidage des roues ainsi que de barre anti-dévers. La lame présente en outre une configuration en forme de oméga afin de s'affranchir des problèmes d'implantation posés par la présence du groupe motopropulseur (non représenté) d'une part et des roues braquées d'autre part.

Dans la suite de la description, on ne décrira que les liaisons de la lame situées d'un même côté de l'axe longitudinal (S) du véhicule, étant entendu que celles-ci sont disposées de manière identique de l'autre côté de l'axe, la lame étant symétrique par rapport à cet axe (S).

Un élément porteur 3 est disposé transversalement sur la face supérieure de la lame et relie entre elles une première articulation 9 et une deuxième articulation 10. Ces articulations 9, 10 sont disposées respectivement à proximité des bords arrière 1'' et avant 1' de la lame de suspension 1.

L'extrémité de la lame est élastiquement reliée à une attache de fixation 4' au porte-fusée 4 de la roue 4''. Cette attache de fixation 4' est constituée, de manière préférentielle, par un embout. L'extrémité inférieure 8 du porte-fusée est disposée dans un alésage de l'attache de fixation, à laquelle elle est fixée par un cordon de soudure.

L'extrémité de la lame 1 est logée dans une partie creuse de l'attache de fixation 4'. La liaison de la lame avec cette attache de fixation 4' ainsi qu'avec l'élément porteur 3 est réalisée par surmoulage et adhérisation d'un matériau élastomère 5, 5'. Une telle liaison élastique permet de réaliser une solidarisation complète de la lame avec l'élément porteur d'une part et l'attache d'autre part. En outre, elle élimine l'usure de la lame provoquée par les liaisons connues et permet d'atténuer efficacement les vibrations générées lors du roulage sans nécessiter de dispositif de filtration des vibrations coûteux et complexes.

La première articulation 9 et la deuxième articulation 10 sont disposées respectivement au niveau de l'extrémité inférieure d'axes 6a, 6b sensiblement verticaux. L'extrémité supérieure (non représentée) des axes 6a et 6b est liée à l'élément de châssis.

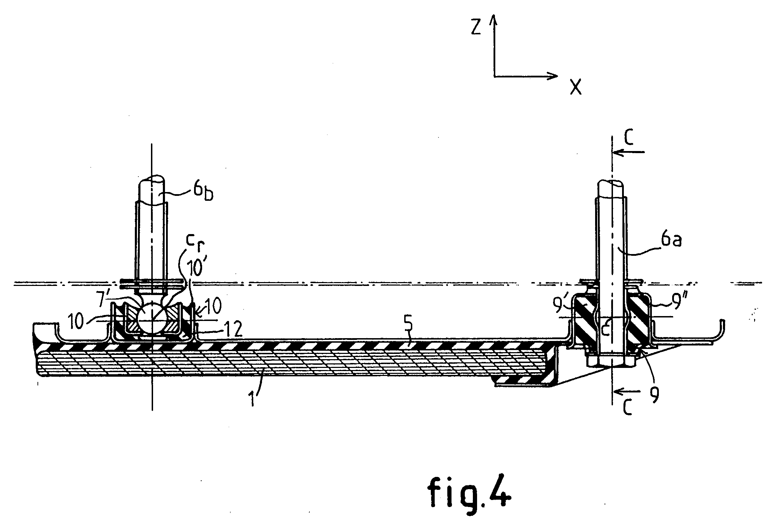

En référence aux figures 4 à 7, le texte qui suit va décrire la constitution de la première articulation et de la deuxième articulation.

La deuxième articulation 10 doit, d'une part, permettre la flexion élastique de la lame lorsque ses extrémités débattent tant au choc qu'au rebond, et, d'autre part, reprendre la composante verticale de la charge du véhicule.

Cette deuxième articulation 10 est constituée, de manière préférentielle, par une rotule portée par l'extrémité d'un axe 6b. Cette rotule comprend une partie sphérique 7' qui coopère avec un boîtier lié à l'élément porteur 3. L'élément porteur 3 peut être réalisé sous la forme d'une poutre comportant une partie centrale en forme de U raccordée latéralement à deux parties en forme de L. Cet élément porteur peut être réalisé par emboutissage. Le boîtier est constitué par deux éléments (10',10''), réalisés de manière avantageuse sous la forme de cuvettes parallépipédiques disposées l'une dans l'autre. Ces éléments sont séparés par une couche de matériau élastomère 12 adhérisé entre eux. Le premier élément 10'' comporte une surface concave avec laquelle coopère la partie sphérique de la rotule. Le deuxième élément 10' est fixé sur la couche de matériau élastomère surmoulée entre l'élément porteur 3 et la face supérieure de la lame, ce deuxième élément étant disposé dans un orifice de l'élément porteur.

La première articulation 9 permet, d'une part, la retenue transversale de la lame afin d'assurer le maintien du plan de roue, et, d'autre part, autorise la flexion élastique de la lame lorsque ses extrémités débattent tant au choc qu'au rebond.

Selon un mode de réalisation préférentiel de cette articulation, représenté sur les figures 4 à 7, la première articulation comprend un boîtier 9'' qui peut notamment présenter une forme cylindrique, doté à ses extrémités de butées périphériques élastiques adhérisées à des rondelles supérieure 11 et inférieure 11'.

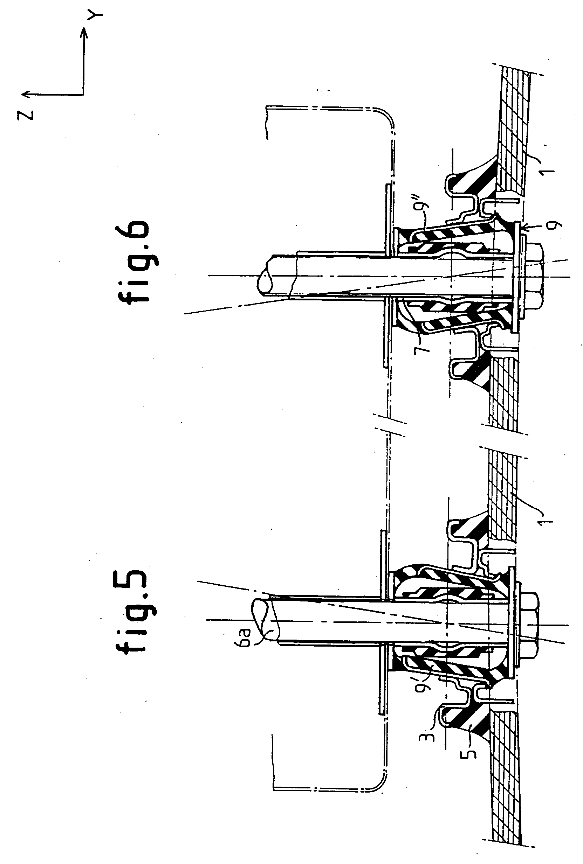

Les figures 5 et 6 représentent respectivement une vue en coupe de la première articulation située du côté gauche du véhicule et de la première articulation située du côté droit du véhicule, dans une position dite "de choc", qui correspond à la position prise par ces dernières au passage d'un obstacle.

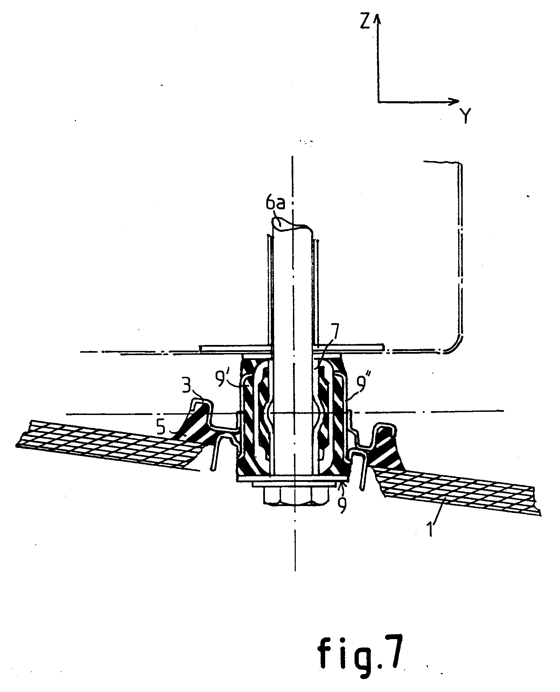

La figure 7 correspond à la première articulation représentée à la figure 6 dans une position dite "de repos", qui correspond à la position prise par l'articulation à l'arrêt du véhicule.

La surface extérieure du boîtier 9'' est disposée dans un alésage de l'élément porteur auquel elle est liée par un cordon de soudure annulaire (non représenté). Un élément tubulaire comportant un renflement sphérique lequel peut notamment être obtenu par repoussage ou par décolletage. Les extrémités de l'élément tubulaire sont fixées respectivement à la rondelle inférieure 11' et supérieure 11''. Un matériau élastomère 9' est adhérisé sur les surfaces en regard d'un élément tubulaire 7 disposé coaxialement dans le boîtier 9'' et de la surface intérieure du boîtier d'autre part. Le matériau élastomère 9' comporte des alvéoles pour augmenter la flexibilité de l'articulation dans un plan vertical ZOY déterminé, la raideur pouvant rester forte dans le plan vertical ZOX perpendiculaire au précédent. Ces alvéoles facilitent le déplacement angulaire de la lame par rapport aux axes de fixation. Par contre, la raideur peut rester forte dans le plan ZOX dépourvu d'alvéoles.

Une tige boulonnée est disposée concentriquement à l'intérieur de l'élément tubulaire. La tige comprend une tête au contact de la rondelle inférieure 11', la tige étant fixée sur l'élément de châssis au moyen d'un écrou (non représenté). La tige boulonnée, supposée suffisamment rigide, limite le déplacement transversal de la lame au seul déplacement permis par l'élasticité du matériau élastomère.

Les centres de rotation respectifs (C,Cr) de la première articulation 9 et de la deuxième articulation 10 sont situés entre l'élément de châssis 2 et la surface extérieure de la lame 1. Selon le mode de réalisation proposé, les centres (C,Cr) sont situés entre la surface supérieure de la lame et l'élément de châssis, une telle disposition n'étant cependant pas limitative.

L'utilisation conjointe des deux types d'articulations ainsi que leur mode de liaison sur la lame permet donc d'assurer le guidage du plan de roue tout en permettant la reprise de la charge verticale. La flexion de la lame peut ainsi s'effectuer sans contraindre la lame au niveau des liaisons avec l'élément de structure. Les solutions proposées par l'invention permettent en outre de résoudre également les problèmes de fatigue locale et de transmission des vibrations posés par les dispositifs de liaison connus lors du débattement de ladite lame. En outre, le montage de la lame sur l'élément de châssis s'effectue très simplement au moyen des tiges boulonnées.

Enfin, la liaison de la lame avec les attaches de fixation sur le porte-fusée d'une part et avec l'élément porteur d'autre part par surmoulage et adhérisation d'un matériau élastomère est aisément réalisable de manière industrielle.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Suspension pour véhicule automobile du type comprenant un ressort à lame (1) transversale qui relie deux roues portées par chacune des extrémités opposées du ressort à lame (1), lequel est en outre élastiquement solidarisé à deux éléments porteurs (3) disposés entre lesdites extrémités, chaque élément porteur (3) étant relié d'une part, à un élément de châssis (2) du véhicule par deux organes de liaison (6,6') et, d'autre part, au ressort à lame (1) par surmoulage et adhérisation d'un matériau élastomère (5), caractérisée en ce que les organes (6, 6') de liaison sont constitués d'axes (6a,6b) s'étendant sensiblement verticalement au niveau des extrémités inférieures desquels sont respectivement montées à proximité des bords avant et arriere du ressort à lame (1) une première articulation (9) et une deuxième articulation (10).

2. Suspension selon la revendication 1, caractérisée en ce que l'élément porteur (3) est monté sur la face supérieure de la lame (1) et s'étend sensiblement transversalement à ladite lame (1).

3. Suspension selon l'une quelconque des revendications précédentes, caractérisée en ce qu'une première articulation (9) et une deuxième articulation (10) situées d'un même côté du plan longitudinal du véhicule sont respectivement disposées à proximité des bords arrière (1') et avant (1'') du ressort à lame (1).

4. Suspension selon l'une quelconque des revendications précédentes, caractérisée en ce que chaque première articulation (9) comprend un bloc élastomère alvéolé (9') adhérisé d'une part, sur un élément de révolution (7) comportant une partie sphérique et, d'autre part, sur un boîtier (9'') solidaire de l'élément porteur (3).

5. Suspension selon l'une quelconque des revendications précédentes, caractérisée en ce que chaque deuxième articulation (10) réalise une liaison de type rotulaire entre la lame (1) de suspension et un élément de châssis (2) du véhicule.

6. Suspension selon la revendication 5, caractérisée en ce que l'axe (6a) de l'organe de liaison (6) comprenant la première articulation (9) est disposé concentriquement à l'intérieur de l'élément de révolution (7).

7. Suspension selon l'ensemble des revendications précédentes, caractérisée en ce que les centres de rotation respectifs (C,Cr) de la première articulation (9) et de la deuxième articulation (10) sont situés entre l'élément de châssis (2) et la surface extérieure de la lame (1).

## Claims

1. A suspension for a motor vehicle of the type comprising a transverse leaf spring (1) which connects two wheels carried by each of the opposite ends of the leaf spring (1), which is also resiliently fixed with respect to two bearer elements (3) disposed between said ends, each bearer element (3) being connected on the one hand to a chassis element (2) of the vehicle by two connecting members (6, 6') and on the other hand to the leaf spring (1) by an elastomer material (5) being moulded thereon and adhered thereto, characterised in that the connecting members (6, 6') are formed by substantially vertically extending spindles (6a, 6b), at the location of the lower ends of which a first pivot mounting (9) and a second pivot mounting (10) are respectively mounted in the proximity of the front and rear edges of the leaf spring (1).

2. A suspension according to claim 1 characterised in that the bearer element (3) is mounted on the upper face of the leaf (1) and extends substantially transversely with respect to said leaf (1).

3. A suspension according to either one of the preceding claims characterised in that a first pivot mounting (9) and a second pivot mounting (10) which are disposed on the same side of the longitudinal plane of the vehicle are respectively disposed in the proximity of the rear (1') and front (1'') edges of the leaf spring (1).

4. A suspension according to any one of the preceding claims characterised in that each pivot mounting (9) comprises an apertured elastomer block (9') which is adhered on the one hand to an element of revolution (7) comprising a spherical part and on the other hand to a casing (9'') which is fixed with respect to the bearer element (3).

5. A suspension according to any one of the preceding claims characterised in that each second pivot mounting (10) provides a connection of ball joint type between the suspension leaf (1) and a chassis element (2) of the vehicle.

6. A suspension according to claim 5 characterised in that the spindle (6a) of the connecting member (6) comprising the first pivot mounting (9) is disposed concentrically in the interior of the element of revolution (7).

7. A suspension according to all of the preceding claims characterised in that the respective centres of rotation (C, Cr) of the first pivot mounting (9) and the second pivot mounting (10) are disposed between the chassis element (2) and the outside surface of the leaf (1).

## Patentansprüche

1. Aufhängung für ein Kraftfahrzeug, mit einer Querblattfeder (1), die zwei Räder verbindet, welche von den beiden gegenüberliegenden Enden der Blattfeder (1) getragen werden und die ausserdem elastisch mit zwei Tragteilen (3) verbunden ist, die zwischen den Enden angeordnet sind, wobei jedes Tragteil (3) einerseits mit einem Teil (2) des Fahrgestells des Fahrzeugs über zwei Verbindungsteile (6, 6') und andererseits mit der Blattfeder durch Ummantelung und kraftschlüssige Verbindung mittels eines Elastomers (5) verbunden ist, dadurch gekennzeichnet, dass die Verbindungsteile (6, 6') aus sich im wesentlichen senkrecht erstreckenden Achsen (6a, 6b) bestehen, wobei auf Höhe ihrer unteren Enden und in der Nähe des vorderen und hinteren Randes der Blattfeder (1) ein erstes Gelenk (9) und ein zweites Gelenk (10) angeordnet sind.

2. Aufhängung nach Anspruch 1, dadurch gekennzeichnet, dass das Tragteil (3) auf der oberen Fläche der Feder (1) angeordnet ist und sich im wesentlichen quer zur Feder (1) erstreckt.

3. Aufhängung nach einem der vorhergehenden Ansprüche, dadurch gekennzeichnet, dass ein erstes Gelenk (9) und ein zweites Gelenk (10), die auf derselben Seite der Längsebene des Fahrzeugs vorgesehen sind, in der Nähe des hinteren Randes (1') bzw. des vorderen Randes (1'') der Blattfeder (2) angeordnet sind.

4. Aufhängung nach einem der vorhergehenden Ansprüche, dadurch gekennzeichnet, dass jedes erste Gelenk (9) einen mehrzelligen, elastischen Block (9') aufweist, der einerseits mit einem rotationssymmetrischen Teil (7) verbunden ist, das einen runden Abschnitt aufweist und andererseits mit einem Gehäuse (9'') verbunden ist, das fest mit dem Tragteil (3) verbunden ist.

5. Aufhängung nach einem der vorhergehenden Ansprüche, dadurch gekennzeichnet, dass jedes zweite Gelenk (10) ein kugelförmiges Gelenk ist zwischen der Feder (1) der Aufhängung und einem Teil des Fahrgestells (2) des Fahrzeugs.

6. Aufhängung nach Anspruch 5, dadurch gekennzeichnet, dass die Achse (6a) des Verbindungsteils (6) die das erste Gelenk (9) aufweist konzentrisch zum Inneren des rotationssymmetrischen Teils (7) angeordnet ist.

7. Aufhängung nach allen vorhergehenden Ansprüchen, dadurch gekennzeichnet, dass die entsprechenden Rotationszentren (C, Cr) des ersten Gelenks (9) und des zweiten Gelenks (10) zwischen dem Teil des Fahrgestells (2) und der Aussenfläche der Feder (1) angeordnet sind.
